# EUROPEAN PATENT SPECIFICATION

(11) **EP 1 749 392 B1**
(45) Date of publication and mention of the grant of the patent: **25.01.2017**
(21) Application number: 04815830.7
(22) Date of filing: 30.12.2004
(51) Int. Cl.: H04M 1/02

(54) **MULTI-FUNCTION TWO PANEL ELECTRONIC DEVICE WITH 360° RELATIVE MOTION**
ELEKTRONISCHE MEHRFUNKTIONS-ZWEITAFELEINRICHTUNG MIT 360° RELATIVER DREHUNG
DISPOSITIF ELECTRONIQUE A DEUX PANNEAUX ET MULTIFONCTIONNEL A MOUVEMENT RELATIF DE 360·

(30) Priority: 21.04.2004 US 829415
(43) Date of publication of application: 07.02.2007
(73) Proprietor: Nokia Technologies Oy, 02610 Espoo (FI)
(72) Inventor: ANDERSON, Ingrid, DK- 6400 Sonderborg (DK); MATTHIASSEN, Benny, DK-4000 Roskilde (DK); HELIN, Totti, FIN-00100 Helsinki (FI); KJELDSEN, Katja, DK-2830 Virum (DK); DAM, Ole, Loftlund, DK-2300 Copenhagen (DK); KUIVAS, Juha, FIN-90800 Oulu (FI); PÄÄKKÖNEN, Pekka, FIN-90940 Jääli (FI); KAUHANIEMI, Ilpo, FIN-01660 Vantaa (FI); STEFANSEN, Mads, DK-2100 Copenhagen O (DK)
(74) Representative: Higgin, Paul
(86) International application number: PCT/US2004/043834
(87) International publication number: WO 2005/109833

(56) References cited:
- EP-A- 1 253 506
- EP-A- 1 335 567
- EP-A- 1 422 593
- EP-A- 1 680 908
- US-A- 5 898 600
- US-A1- 2002 006 815
- US-A1- 2002 097 217
- US-A1- 2002 183 099
- US-A1- 2003 048 481
- US-A1- 2003 199 290

## Description

### BACKGROUND OF THE INVENTION

### 1. Field of the Invention

The subject matter of this application relates to an arrangement of components that combines the functions of a multi-use electronic device to optimize their usefulness. More specifically, this application describes a unique arrangement of a two panel electronic device, where the panels are connected by a hinge that allows 360° relative movement, thereby providing multiple operational positions for different functions.

### 2. Brief Description of Related Developments

Mobile telephones and similar communication devices are rapidly expanding in use and function. Such devices will soon provide Internet access, personal information management, facsimile, text messaging, picture, video, radio, in addition to telephone communication. To accomplish this there is a need to provide an arrangement of the components in a package that allows the efficient and ergonomically convenient use of the various functions.

With the introduction of multi-function electronic devices, it has become increasingly more difficult to design a user interface that enables the user to access the many types of functions and applications available in small hand held devices. It is a particular challenge to present a simple and efficient means by which the user can communicate with the device for browsing, selecting, and operating amidst the wide array of functional choices. The user interface generally consists of a keypad for entering data and commands and a display screen for presenting information relating to operation of the selected function.

U. S. Patent No. 6,757,157 is an example of a device which shows a two panel construction in which the two panels are moveable with respect to each other by means of an interconnecting hinge. The hinge is constructed to permit a full range of 360° relative movement between the panels. A display screen is mounted on one panel and a keyboard is constructed in the other panel. At 0° the display screen covers the keyboard in a closed position, an intermediate position allows the keyboard to be used in conjunction with the display and in a fully open position the display is rotated to be reversed to the opposite face of the other panel.

Hinges, especially adapted for use in providing relative movement between 'two panels of a mobile communication device, are described in commonly owned, U.S. Patent Application Numbers 10/829415, filed April 21, 2004 and 10/421278, filed April 23, 2003. Hinges of the type described in these applications would be adaptable to provide the relative motion of the panels of the device of this invention.

WO 2005/048575, which was published on 26 May 2005, discloses an ergonomic clamshell housing for a mobile device with a camera comprises a housing with a hinge mechanism that pivotally connects a display section to a camera section. The hinge mechanism allows the display and camera sections to rotate relative to each other between at least a first folded position and a second folded position. When in the first folded position, the display and camera sections are folded in a side-by-side relation such that the display and camera lens face each other. When in the second folded position, the display and camera sections are folded in a side-by-side relation such that the display and camera lens face away from each other.

US 5,898,600 discloses a portable information processing apparatus that includes a first member provided with an information display unit and a second member provided with an information input unit. A hinge member pivotally connects the first and second members with each other so that the first and second members are pivotable between: (i) a portable position in which the first and second members overlap each such that the outer surface of the first member and the outer surface of the second member oppose each other, and (ii) an open position in which the outer surface of the first member and the outer surface of the second member are moved away from each other so as to separate the first and second members from each other. A photographing unit performs a photographing operation and an exposed portion protecting member protects an exposed portion of the information input unit when the information processing apparatus is placed on a plain surface with the outer surface of the second member facing the plain surface. The information display unit provided in the first member includes a display for displaying photographic image information obtained by the photographing unit, and the information input unit provided in the second member includes at least one of: (i) a photographic conditions setting device for setting various photographing conditions of the photographing unit, and (ii) a shutter release device for controlling a shutter of the photographing unit.

EP 1 335 567 provides a mobile terminal for use in a wireless telecommunication system having a casing with a first body and a second body, each body having a front surface accommodating control elements and/or display elements 911) and a back surface located on the side opposite the front surface of the respective body, and a hinge joint with a first axis of rotation for the first body and a second axis of rotation for the second body, with the hinge joint enabling the first body to turn freely around the second body between a first position, where the front surface of the first body faces the front surface of the second body, a second position, where the front surface of the first body and the front service of the second body are simultaneously readable, and a third position, where the back surface of the first body faces the back surface of the second body.

EP 1 253 506 A2 discloses a folding electronic device comprising a first part and a second part arranged to turn with respect to the first part. The first part comprises data input means and the second part comprises a display unit. The parts can be turned with respect to each other into a folded position and an open position. In the folded position, the data input means and the display unit are on different, outer sides of the device and at least some of the data means are arranged to operate as a pointing device of the display.

It is a purpose of embodiments of this invention to use a two panel construction to arrange the components of a multi-use device in the most convenient and useful manner.

### SUMMARY OF THE INVENTION

The present invention is as set out in the independent claims.

A multi-function electronic device, such as a combination PDA/cellular telephone is designed to provide a wide variety of functions including, personal digital assistant, Internet access, cellular telephone, digital camera, clock, radio, picture frame and others. The device consists of two panels attached for relative movement by a hinge. The hinge provides, a range of movement of a full 360°. The various functions are accessed by moving the relative position of the panels from 0°, to 165°, to 180°, to 300°, to 360°. Other positions may be used as functions are added. A microprocessor controller correlates particular functions to preselected panel positions that ergonomically suit the selected functions in response to sensed position and features selected by the user.

Each of the panels is constructed as a housing that encloses the components of the device in various known configurations to provide a wide variety of functions and applications. These components include, for example a microprocessor, mobile telephone transceiver, PDA, display driver firmware, display memory and other processor components depending on the features offered to the user.

In accordance with one aspect of the invention, a display screen and keyboard are arranged on a front side of each panel on opposite sides of the hinge of a two panel mobile communications terminal. The hinge allows a full 360° relative movement between the two panels. Functional components are enclosed within the panels for providing mobile communications, digital camera, and notepad features. These features are enabled by a microprocessor when the relative positions of the panels are at 165°, 180°, and 360°. The display screen is capable of providing a display associated with each of the features, for example data display for mobile communications, touch sensitive display for notepad and view finder display for digital camera.

In accordance with a further aspect of this invention the notepad and camera features are enabled in thy 360° position. Mobile communications are enabled in the 165° position and notepad and mobile communications are available in the 180° position.

In accordance with another aspect of the invention, a primary display screen and primary keyboard are arranged on a front side of each panel on opposite sides of the hinge of a two panel mobile communications terminal. In addition, the back side of each panels is also used for providing a secondary display and secondary keyboard or keypad. The hinge allows a full 360° relative movement between the two panels. Functional components are enclosed within the panels for providing mobile communications, digital camera, notepad features, PDA functions, clock radio and Internet access. These features are enabled by a microprocessor when the relative positions of the panels are at 360°, 300°, 180°, and 165°. The primary and secondary display screens are capable of providing a display associated with some or all of the features, for example data display for mobile communications, clock radio, and Internet, touch sensitive display for notepad and view finder display for digital camera. The keyboard and keypad are capable of entering data associated with some or all of the features.

In accordance with another aspect of this invention, the microprocessor controller receives signals from sensors indicating the relative positions of the panels and the controller enables selected features in response to these positions. Individual features are selected by the user by operation of function buttons mounted on the panels.

In accordance with another aspect of this invention a primary display screen is mounted on a front surface of the first panel of a two panel multi-function device and is adapted to display data relating to the functions, such as, for example, mobile communications, personal data assistant (PDA), notepad, clock radio, Internet, and other data displays depending on the operational selection of the user and the relative position of the panels. A primary keyboard is provided on the front surface of the second panel located on the opposite side of the hinge. The primary keyboard provides a means of inputting data for use in telephone functions, PDA functions, and other functions as necessary. Appropriate function buttons are also provided on one or both of the first and second panels to facilitate browsing and selection of menu items displayed on the display screen. A secondary display screen is mounted on the back surface of the second panel. A secondary keypad and grouping of function buttons are provided on the back side of the second panel. A camera is mounted on the back surface of the first panel for operative use with either the primary or secondary displays.

In accordance with another aspect of the Invention a camera lens is mounted for use on the back surface of the first panel and may be used either in the closed, 0°, position in association with the secondary display panel or in an open position, such as in the range of 90° to 180° in association with the primary display panel. Camera usage is optimized in the 0° position.

In accordance with another aspect of the invention a free standing mode is provided at approximately 270°-300° which allows the device to be placed with the primary screen exposed in an easily viewable position and the second panel providing a base to allow the device to be supported upright without the need for holding the device. In this free-standing position, the use of the alarm clock and radio function is most convenient. In addition a photo may be displayed for continuing observation in the nature of a picture frame.

In accordance with another aspect of the invention, the device may also be extended flat for table use in the 180° orientation of the panels with the front surfaces of the first and second panels exposed for use and viewing. In this position, the PDA function is most accessible, but all features can also be used. The cellular phone is particularly well adapted for hands free operation in this position. In addition, the function mode in which Internet access is allowed would also be selectable in the 180° position.

In accordance with another aspect of the invention, the functioning of the device is controlled by a microprocessor which monitors the relative position of the first and second panels to identify accessible function and assign functions to the components of the user interface. Certain of the keys provided will be soft keys in that their function will depend on the relative position of the first and second panels and the function selected. In addition, the display driver is designed to switch the display to the viewable display screen in response to movement and position of the panels. The orientation and position of the display on the display screen may also be changed to accommodate the user in the most convenient manner consistent with the function selected. Different menus and data may be displayed depending on the position of the panels and the selected use.

The operable positions of the panels can be expanded or altered for adaptation to alternative or additional modes of operation.

In another aspect not covered by the invention, the hinge used in the device of this application comprises a first hinge member defining a first axis of rotation with the first panel, a second hinge member defining an offset second axis of rotation with the second panel, and synchronizing members which transfer rotational movement of the first panel relative to the hinge to rotational movement of the second panel relative to the hinge. Due to the synchronized movements of the first and second panels, the two panels will fold and unfold smoothly without the risk of jamming the hinge, i.e. the case where one panel unfolds in relation to the hinge while the second panel remains immovable relative to the hinge. Hinges of this type are described in the commonly owned pending patent applications referenced above.

### BRIEF DESCRIPTION OF THE DRAWINGS

The device of this invention is explained in more detail below with reference to the accompanying drawing, in which:
FIG. 1 is a perspective view of an embodiment of a mobile communications terminal in a first closed position incorporating features of the present invention;
FIG. 2 is a perspective view of the mobile communications terminal shown in FIG. 1 with housing components moved to a 180° flipped open position;
FIG. 3 is a perspective view of the mobile communications terminal shown in FIG. 1 with housing components moved to a 360 degree fully flipped open and folded position;
FIGS. 4a-4f are schematic perspective views of the device showing an assortment of positions of the panels of the device of this invention;
FIG. 5 is an exploded perspective view of the device shown in FIG. 1;
FIG. 6 is a block diagram of the components providing features in the embodiment of FIG. 1;
FIG. 7 is a front plan view of another embodiment of a device incorporating features of the subject invention;
FIG. 8 is a back plan view of the device shown in FIG. 7;
FIG. 9 is a block diagram of the system of the device shown in FIG. 7;
FIG. 10 is an illustration of the use of the camera feature of an embodiment of this invention;
FIG. 11 is an illustration of the use of the camera and other features of an embodiment of this invention;
FIG. 12 is an illustration of the use of the free standing feature of this invention; and
FIGS. 13-15 are illustrations of the use of the notepad feature of this invention.

### DETAILED DESCRIPTION OF THE PREFERRED EMBODIMENT(s)

A multifunctional device 10, for example a combination PDA cellular telephone incorporating features of the present invention is illustrated in the figures. Although the present invention will be described with reference to the embodiments shown in the drawings, it should be understood that the present invention may have many alternate forms. In addition, any suitable size, shape or type of elements or materials could be used.

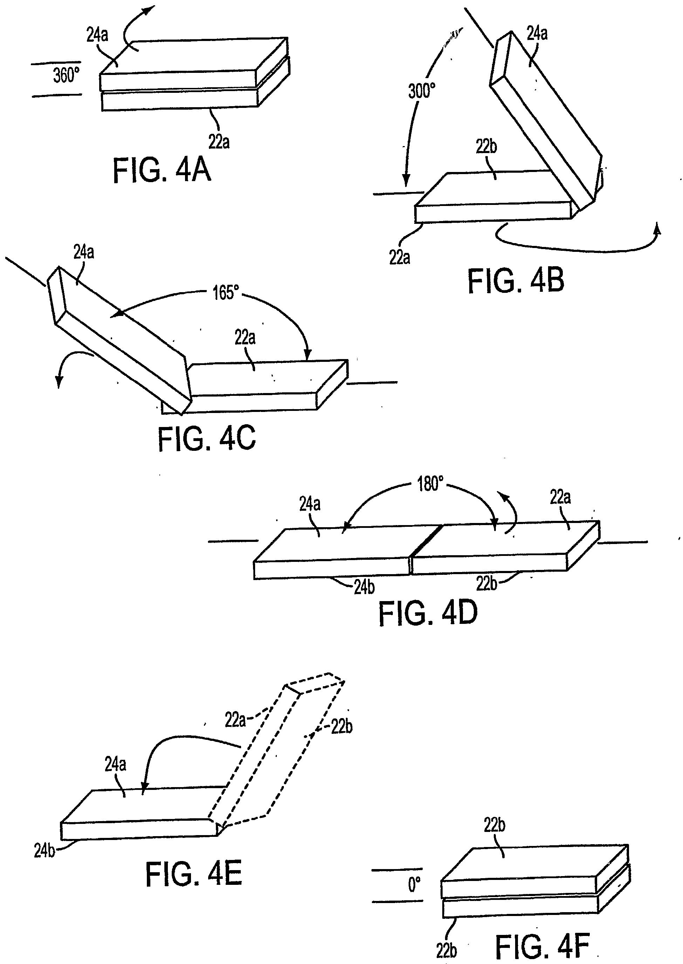

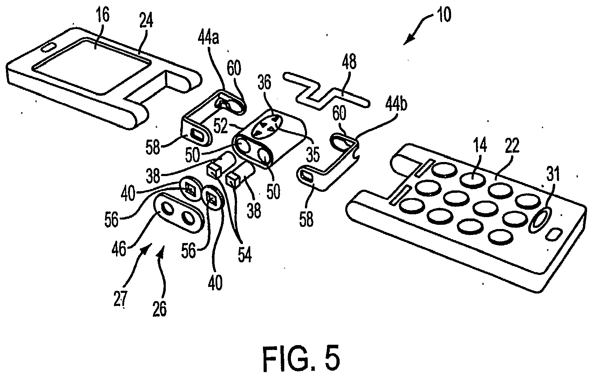

A multi-function electronic device, such as a combination PDA/cellular telephone is designed to provide a wide variety of functions including, personal digital assistant, Internet access, cellular telephone, digital camera, clock, radio, picture frame and others. As shown schematically in FIGS. 4a-4f, the device consists of two panels 22 and 24 attached for relative movement by a hinge, see FIG. 5. The hinge provides a range of movement of a full 360°. The various functions are accessed by moving the relative position of the panels 22 and 24, for example as shown in FIGS. 4a-4f, from O°, to 165°, to 180°, to 300°, to 360°. Other positions may be used as functions are added. Particular functions are correlated to panel orientations or positions, wherein the panels and components are arranged so that the user and the device interact most efficiently.

Each of the panels 22 and 24 is constructed as a housing that encloses the components of the device in various known configurations to provide a wide variety of functions and applications. These components include, for example a microprocessor, mobile telephone transceiver, PDA, display driver firmware, display memory and other processor components depending on the functions offered to the user.

For ease of description and illustration, the panels 22 and 24 are generally designated in this application, as a first panel. 22 located to the left of the user and a second panel 24 located to the right of the user. Each of the panels have front and back surfaces 22a, 24a, 22b and 24b respectively with the front surface being the surface facing the user in the fully open position of 180°, see FIG. 4d. Each of the panels is constructed with various forms of a system of components that comprise the user interface of the device.

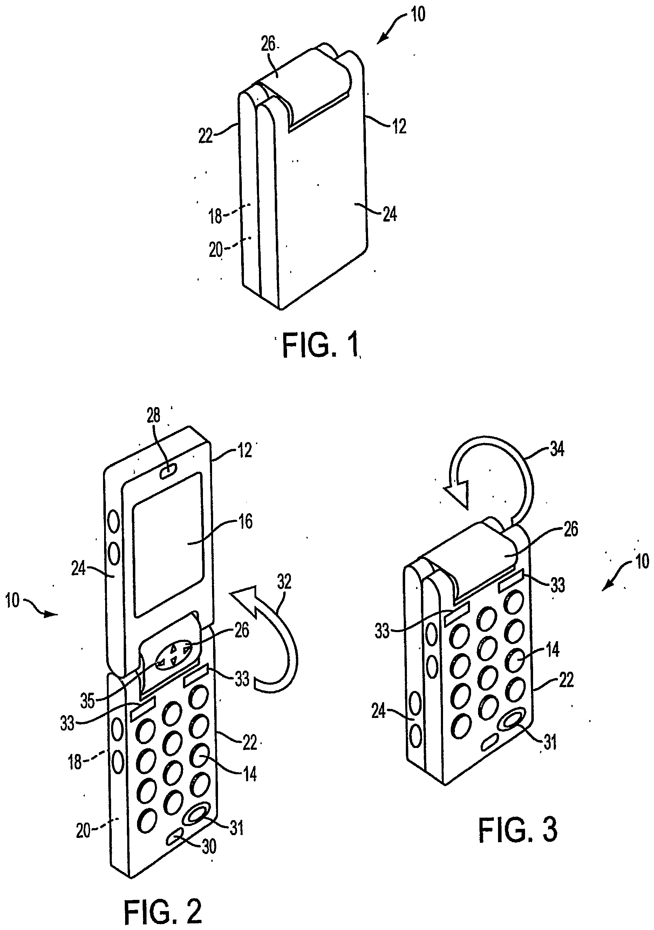

In the embodiment shown in FIGS. 1-3, the multifunction device 10 comprises a mobile communications terminal, such as a mobile telephone. In alternate embodiments, the mobile communications terminal could comprise any suitable type of mobile communicator, such as a device which comprises a pager function or a text transmission function. The mobile communications terminal 10 includes a digital camera feature 31.

Referring also to Fig. 2, the mobile communications terminal 10, in the embodiment shown, generally comprises a housing 12, a keypad 14, a display 16, a transceiver 18, a battery 20 and other components conventional to a mobile telephone, such as a microprocessor and an antenna. The housing 12 generally comprises a first panel 22, a second panel 24, and a connection 26 which movably connects the second panel 24 to the first panel 22. In the embodiment shown, the keypad 14 is connected to the first panel 22 of the housing. The display 16 is connected to the second panel 24 of the housing. The various electronic components of the terminal 10 could be located in any one or more of the housing panels 22 and 24, interconnected through connection 26.

Referring particularly to Figs. 1-3, the housing 12 is movable into at least three different configurations. Fig. 1 shows the housing 12 in a closed, folded first configuration. In this closed, folded first configuration the first and second panels 22, 24 are located adjacent each other with the display 16 and keypad 14 facing each other in a protected position. This provides a compact folded configuration wherein the keypad 14 and display 16 are not readily accessible to the user. In an alternate embodiment, the first panel 22 could comprise the display 16.

Fig. 2 shows the housing 12 in the first open position. More specifically, the connection 26 allows the second panel 24 of the housing to be flipped open about 180 degrees relative to the first panel 22 of the housing as indicated by arrow 32. In the embodiment shown, the second panel 24 is substantially aligned with the first panel 22 and the connection 26. However, in alternate embodiments, the first open position could comprises the second panel 24 being located at an angle of less than 180 degrees, such as in the range of 160° to 170° for example, or preferably at 165°. This first open position allows the user to locate a speaker or sound transducer 28 at the user's ear and a microphone 30 proximate the user's mouth.

Fig. 3 shows the housing 12 in a second open position. More specifically, the connection 26 allows the second panel 24 of the housing to be folded over about another 180 degrees relative to the first panel 22 of the housing as indicated by arrow 34. In this fully open, 360° flipped position, the first and second panels 22, 24 are collapsed with their back surfaces 22b and 24b facing each other in a reverse orientation relative to the closed, folded position shown in Fig. 1. In this second open position, the keypad 14 is located at the exterior facing side of the first panel 22 and the display 16 is located at the opposite exterior facing side of the second panel 24. In the folded fully open position shown in Fig. 3 a user can use the mobile communications terminal 10 in this collapsed, folded configuration.

In the embodiment of this invention, as shown in FIGS. 2 and 3, a camera is contained within panel 22 with a lens 31 providing a viewing range extending outward from the front of panel 22. In addition, at least a portion of display 16 is operable as a touch sensitive display configured to provide a notepad mode of operation. Function keys and buttons, such as browser key 35 and buttons 33, are also provided for operation of features available in a particular position of the panels. In addition additional keys 27, such as shown at the sides of panels 22 and 24 in FIGS. 2 and 3, may be provided. Some or all of the keys 27, 33 and 35 may be soft keys that may be assigned different values depending on the position of the panels and the function selected. Browser key 35 is shown integrated into the hinge 36.

Referring to Fig. 5, an exploded perspective view of an exemplary embodiment of the mobile communications terminal 10 is shown. The connection 26 generally comprises a synchronized rotation, multi-axis hinge 27 and an electrical flex conductor 48. Flex connector 48 is used to interconnect the components of the mobile communications terminal 10 across the connection 26. Flex connector 48 can also be used to connect electrical components constructed in the hinge 27, such as browser key 35. The hinge 27 generally comprises a hinge frame 36, two hinge modules or pins 38, synchronizing gears 40, two frame members 44a, 44b, and a dust cover 46. The hinge frame 36 has a general oval side profile. The hinge frame 36 comprises two parallel pin receiving areas 50. The hinge frame 36 also comprises a recess 52 at the entrance to the pin receiving areas 50.

The hinge modules 38 are rotatably located in the receiving areas 50. Front portions 54 have a keyed shape to be received in key shaped apertures 56 of the gears 40. The gears 40 are interlockingly connected to each other by their teeth and grooves. With the gears 40 mounted on the front portions 54 of the hinge modules 38, the gears 40 are fixedly attached to the hinge modules 38 for synchronized rotation of the hinge modules 38 relative to each other. The gears 40 are located in the recess 52 of the hinge frame 36. The gears 40 form synchronization members to assist in synchronizing movement of the hinge frame 36 relative to movement of the first and second sections 22, 24 relative to each other. The hinge modules could be commercially available products. The hinge modules could comprise an internal detent system.

The front portions 54 of the hinge modules 38 are also connected to ends 58 the frame members 44a, 44b. Specifically, a first one of the hinge modules 38 is fixed to the front portion 54 of the first frame member 44a and, a second one of the hinge modules 38 is fixed to the front portion 54 of the second frame member 44b. The dust cover 46 is preferably located between the gears 40 and the frame members 44a, 44b. The dust cover 46 helps to prevent dust or debris from entering into the receiving areas 50 of the hinge frame 36 and interfering with the interlocking engagement of the teeth and grooves of the gears 40. In the embodiment shown, opposite ends 60 of the frame members 44a, 44b are pivotably connected to pivot sections extending from the hinge frame 36.

The first frame member 44a is fixed to the first section 22 of the housing. The second frame member 44b is fixed to the second section 24 of the housing.

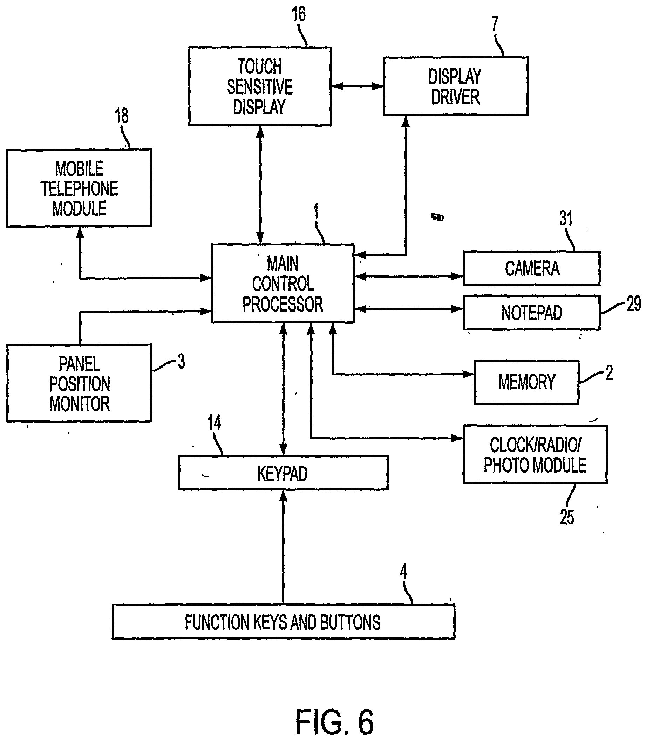

As shown in FIG. 6, the multifunction communication terminal 10 of FIGS. 1-3, comprises a system of components that are operatively interconnected to provide the combined functions of a camera 31, notepad 29, and mobile telephone 18. A main control processor 1 is supported by a memory 2 and processes data and commands from a mobile telephone module 18 and a notepad module 29 and other user interface components. The user interface of the device 10 of FIGS. 1-3 includes a display 16, operable for both data and image display as well as touch sensitive operation, and a keypad 14 in association with function keys and buttons 4 (such as 33 and 35 in FIGS. 2 and 3). The display 16 has an associated display driver 7.

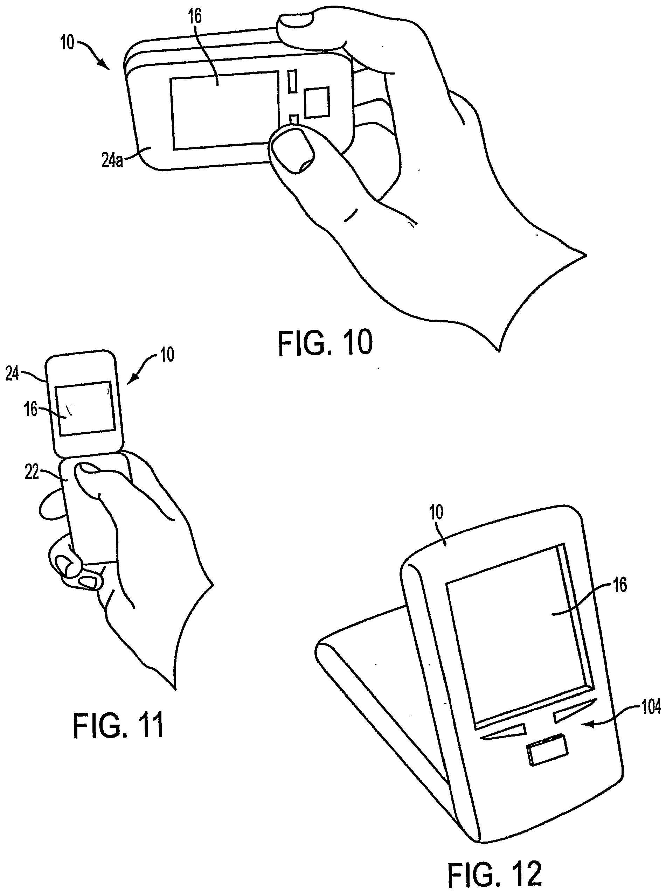

The camera, telephone and notepad features are arranged for use in predetermined positions of the panels 22 and 24. Additional panel orientations are shown in FIGS. 4a - 4b. The positions are selected to best suit the ergonomics of the particular functions. The microprocessor controller 1 receives position data from panel monitor 3 which, utilizing sensors in connector 26, generates signals indicative of the panel positions. With this data main control processor 1 adjusts the functioning of device 10 accordingly. For example, in the closed position shown in FIG. 1 all features are disabled and the device is off or in standby mode. The camera feature is enabled in the 180° position of FIG. 2 or the 360° position of FIG. 3. In the position of FIG. 2, display 16 operates as the view finder of the camera in a portrait orientation directed at the user, as illustrated in FIG. 11. By appropriate focusing this could be used for video calls with the picture of the user being shown and transmitted. In the 360° position, the camera can be used in a more conventional manner with the camera view away from the user, as shown in FIG. 10. Display 16 again operates as a view finder to show the field of view of the camera 31, but in landscape orientation.

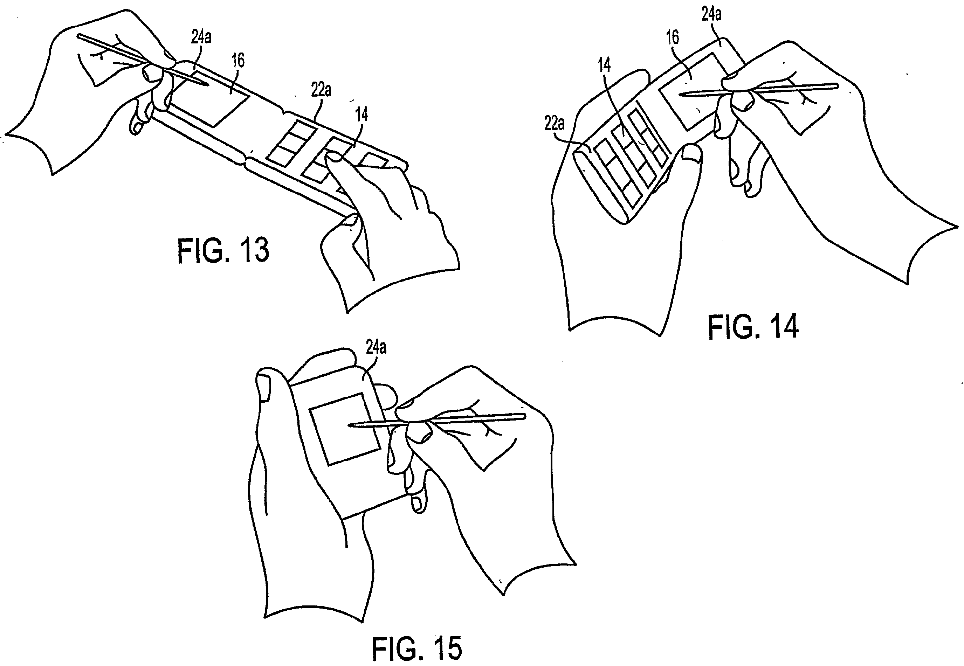

Notepad 29 may be enabled in the 180° position. A function button, such as shown at 33 in FIG. 2, may be used to indicate to the processor 1, that the notepad feature is selected. Processor 1 would then enable the note pad module 29 and display 16 would be touch sensitive. This can be a pointer operated sensitivity allowing free hand markings for a true note pad feel. In the 180° position the device can be oriented for operation with the keypad 14 at the right or left hand side, as shown in FIGS. 13 and 14. This also allows convenient operation for either right or left handed users. The flat nature of this orientation allows the notepad function to be used on a table or other flat surface. The notepad feature is also enabled in the 360° position, as shown in FIG. 11. The display 16 is oriented on the back of the folded unit, shown in FIG. 3 and in the reverse position may be conveniently hand held for use as a notepad, as shown in FIG. 15.

In a further embodiment, the mobile communications terminal 10 of FIGS. 1-3 is constructed with a clock radio, photo module 25 which provides a clock function in associated with a radio function for alarm or listing purposes. A photo could also be displayed either as a temporary or extended display. This feature is enabled in an intermediate position, for example approximately 300°, as shown in FIG. 4b and FIG. 12. In this position panel 22 operates as a base with panel 24 extending upward having its surface 24a in a conveniently viewable orientation. As shown in FIG. 12, surface 24a is constructed with the display 16 in full view. In this position main control processor 1, enables the clock radio photo module 25 and causes the display of time, radio selection, or photo.

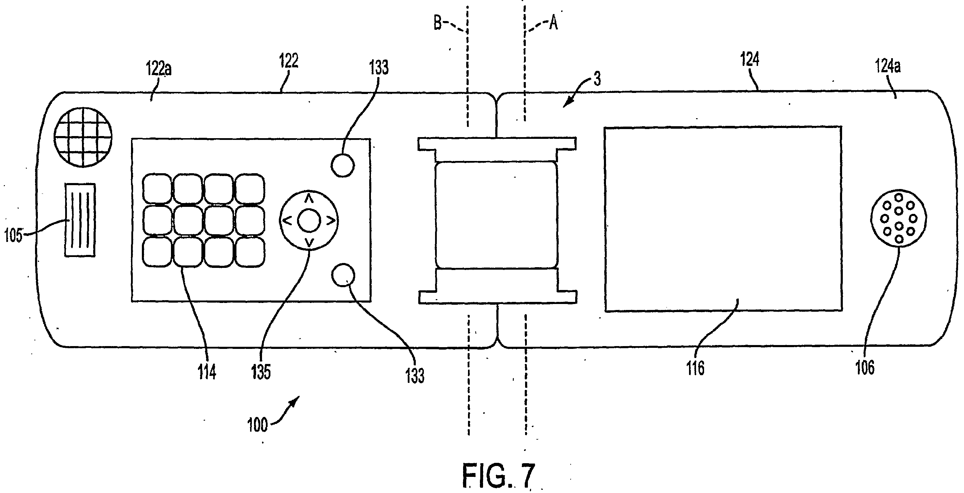

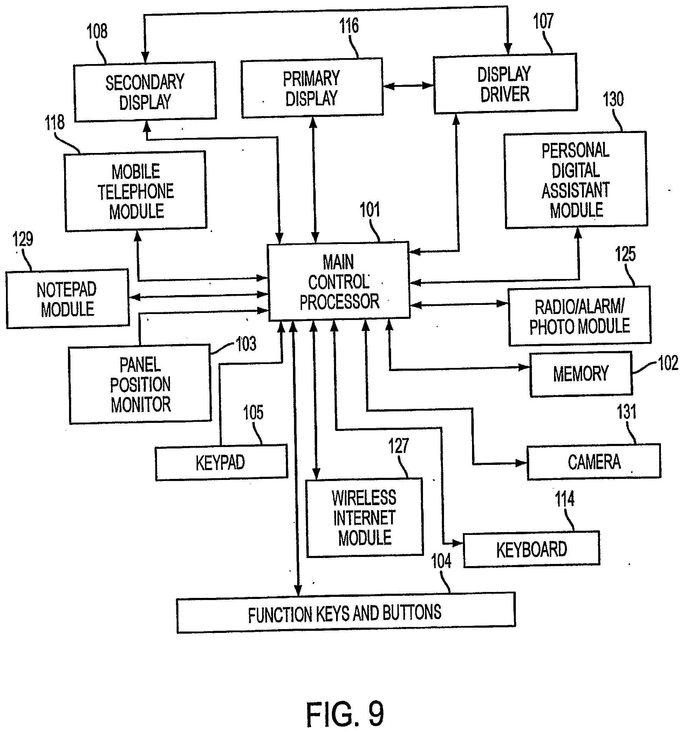

In another embodiment, a multi-function device 100 is constructed as a combination personal digital assistant and a mobile communication terminal, as illustrated in FIGS. 7-9. PDA/mobile terminal 100 is constructed with a two panel housing that encloses the components of the device 100 in the general configuration illustrated in FIG. 9 to provide a wider variety of functions and applications. The device is constructed having a first panel 122 and a second panel 124. First panel 122 has a front surface 122a and a back surface 122b. Second panel 124 has a front surface 124a and a back surface 124b.

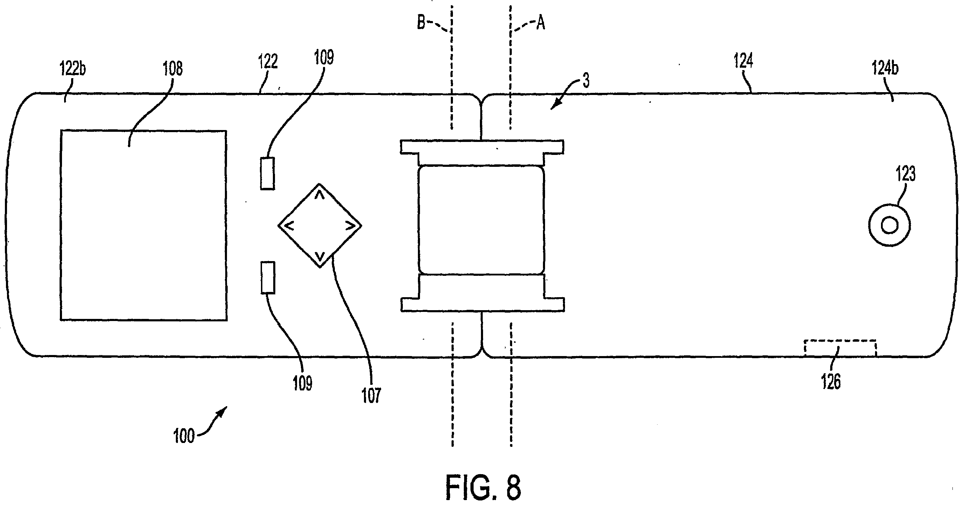

As shown in FIG. 7 the front surfaces 122a and 124a are shown in the flat 180° position. A primary display screen 116 is mounted on front surface 124a of the second panel 124 and is constructed to provide a user interface component adapted to display data relating to the various functions provided, such as, for example, communications, a PDA, note pad and other data displays depending on the operational selection of the user and the relative position of the panels. A primary keyboard 114 is provided on the front surface 122a of the first panel 122, to provide a means of inputting data for use in telephone functions, PDA functions, and other functions as necessary. Appropriate function buttons 104, such as soft keys 109, 133 and browser keys 107, 135 in FIGS. 7 and 8 are also provided to facilitate selection of features and browsing through menus associated with a particular feature.

In FIG. 8, the back side of the device 100 of FIG. 7 is illustrated having back side 122b. and 124b. A secondary display screen 108 is mounted on the back surface 122b of the first panel 122. Display 108 may be conveniently used in the closed (0°) position (see FIG. 4f). A secondary keypad or grouping of function buttons, such as buttons 109 and browser key 107, are provided on the back side 122b for use with the camera and other functions accessible in the various positions in which the back of the second panel is exposed, such as the 0° position.

A camera lens 123 is mounted for use on the back surface 124b a of second panel 124 and may be used either in the closed, 0°, position in association with the secondary display panel 108 or in an open position, such as in the range of 90° to 180° in association with the primary display panel 116. Camera usage is optimized in the 0° position. A receptacle connector 126 may be provided for the connection of an accessory flash unit (not shown).

A free standing mode is provided at approximately 270°-300° which allows the device to be placed with the primary screen exposed in an easily viewable position and the second panel providing a base to allow the device to be supported upright without the need for holding the device. In this free-standing position, the use of the alarm clock and radio function is most convenient.

The device may also be extended flat for table use in the 180° orientation of the panels with the front surfaces of the first and second panels exposed for use and viewing. In this position, the PDA function is most accessible, but all features can also be used. The cellular phone is particularly well adapted for hands free operation in this position. In addition the function mode in which Internet access is allowed would also be selectable in the 180° position.

The functioning of the device 100 is controlled by a microprocessor 101 which monitors the relative position of the first and second panels 122 and 124 to identify accessible functions and assign functions to the components of the user interface. Certain of the keys provided will be soft keys, such as 107,109, and 133 in that their function will be assigned by microprocessor 101, depending on the relative position of the first and second panels and the function selected. In addition, the display driver 107 is designed to switch the display to the viewable primary display screen 116 or secondary display screen 108 in response to movement and position of the panels. The orientation and position of the display on the display screen 116 or 108 may also be changed to accommodate the user in the most convenient manner consistent with the function selected. Different menus and data may be displayed depending on the position of the panels and the selected use.

As shown in FIG. 9, the multifunction communication terminal 100 of FIGS. 7-9, comprises a system of components that are operatively interconnected to provide the combined functions of a camera 131, notepad 129, and mobile telephone 118. A main control processor 101 is supported by a memory 102 and processes data and commands from a mobile telephone module 118 and a notepad module 129, PDA module 130 and other user interface components. The user interface of the device 100 of FIGS. 7-9 includes a display 116 and a keypad 114 in association with function keys and buttons 104 (such as 133 and 135 in FIGS. 2 and 3). The display 116 has an associated driver 107. Display screen 116 is operable in a touch sensitive mode to support the notepad module 118 and a data or image display mode to support other functions. Browser key 107 and soft keys 109 provide a user interface for use in the 0° position of the panels.

In alternate embodiment, a clock/radio/photo module 125 may be provided to offer the function of a radio alarm and photo display function as previously described. In addition a secondary keypad 105 could located on the back side of panel 122 to provide further functionality. In addition Internet access could be provided by a wireless Internet module 127.

The operable positions of the panels can be expanded or altered for adaptation to alternative or additional modes of operation.

The arrangement of the keyboard of panel 22 in FIGS. 2 and 3 and panel 122 in FIGS. 7 and 8 are merely exemplary, and any suitable arrangement of keys and functions, including the types of buttons and keys, is within the scope of the invention.

It should be understood that the above description is only illustrative of the invention. Various alternatives and modifications can be devised by those skilled in the art with out departing from the invention. Accordingly, the present invention is intended to embrace all such alternatives, modifications and variances which fall with the scope of the appended claims.

## Claims

1. A mobile multi-function electronic device (10) comprising:
a first panel (22) having front (22a) and back (22b) surfaces;
a second panel (24) having front (24a) and back (24b) surfaces, wherein said first and second panels are connected by means of a hinge, said hinge constructed to allow relative movement of said first and second panels in a range of positions from 0° at which said front surfaces of said panels are facing each other to 360° at which said back surfaces of said panels are facing each other;
and a touch sensitive display (16);
**characterised in that** the mobile multi-function electronic device is configured to:
monitor a relative position of the first and second panels to determine one of at least three pre-determined positions, wherein each of the at the least three pre-determined positions is associated with one or more functions accessible for user selection,
determine one or more functions accessible for user selection responsive to the determination of one of at least three pre-determined positions and said association,
receive a user selection of one of the determined one or more functions accessible for user selection, and
enable the selected function.

2. A mobile multi-function electronic device (10), according to claim 1, further comprising:
the touch sensitive display being constructed in the front surface of the first panel (22) to allow the user to view data and images as required by the selected function;
a keyboard (14) constructed in the front surface of the second panel (24) to allow a user to enter data and commands as required by the selected function;
a mobile communications module (18) contained in the panels and connected to the microprocessor to provide a mobile communications function;
a digital camera module (31) constructed in the mobile multi-function electronic device (10) and connected to the microprocessor to allow the user to capture digital images in operative association with the display screen; and
a notepad module (29) constructed in the mobile multi-function electronic device (10) and connected to the microprocessor to allow the user to enter free formed notes.

3. A mobile multi-function electronic device (10), according to claim 2, wherein said notepad module (29) is in operative association with the touch sensitive display (16).

4. A mobile multi-function electronic device (10), according to claim 2, wherein the arrangement of the components of the digital camera (31) are configured for use when the relative position of the panels (22, 24) are at 360 °.

5. A mobile multi-function electronic device (10), according to claim 2, wherein the arrangement of the components of the notepad module (29) are configured for use when the relative position of the panels (22, 24) are at 360 ° and 180°.

6. A mobile multi-function electronic device (10), according to claim 2, wherein the arrangement of the components of the mobile communications module (18) are configured for use when the relative position of the panels (22, 24) are in the range of 160 ° to 170°.

7. A mobile multi-function electronic device (10), according to claim 1, further comprising an arrangement of function keys and buttons (4) arranged on said panels (22, 24) and adapted to facilitate the use of said multiple functions, wherein said buttons are assigned different functionality by the microprocessor (1) depending on the relative position of the panels (22, 24) and the function selected by the user.

8. A mobile multi-function electronic device (10), according to claim 2, further comprising:
a secondary display screen (108) constructed in the back surface of said second panel (24) to allow the user to view data and images as required by the selected function when the relative position of the panels (22, 24) obscure the touch sensitive display (16);
a keypad (14) constructed in the back surface of said second panel (24) to allow the user to enter data and commands as required by the selected function when the relative position of the panels (22, 24) obscures the keyboard; and
wherein a lens for the digital camera module (31) is constructed in the back surface of the first panel (22) to provide a field of view extending outward therefrom, and further wherein the arrangement of the components of the digital camera module (31) are configured for use when the relative position of the panels (22, 24) are at 0 °.

9. A mobile multi-function electronic device (10), according to claim 2, further comprising a clock module constructed in the mobile multi-function electronic device (10) and connected to the microprocessor to provide time functions to allow the user to view time information in operative association with the display screen and wherein said clock module is enabled when the relative position of the panels is 300°, said mobile multi-function electronic device (10) being supported in free standing position on said front surface of said second panel.

10. A mobile multi-function electronic device (10), according to claim 2, further comprising a radio module constructed in the mobile multi-function electronic device (10) and connected to the microprocessor to provide a radio function to allow the user to listen to radio transmissions and wherein said radio module is enabled when the relative position of the panels is 300 °, said mobile multi-function electronic device (10) being supported in free standing position on said front surface of said second panel.

11. A mobile multi-function electronic device (10), according to claim 2, further comprising a personal digital assistant module constructed in the mobile multi-function electronic device (10) and connected to the microprocessor to provide a personal digital assistant function to allow the user to enter and view data in operative association with the display screen and wherein said personal digital assistant module is enabled when the relative position of the panels is 180° or 360°.

12. A mobile multi-function electronic device (10), according to claim 2, further comprising a photo module (25) configured to provide a photo display function to allow the user to view photo in operative association with the display screen (16) and wherein said clock module (25) is enabled when the relative position of the panels is 300°, said mobile multi-function electronic device (10) being supported in free standing position on said front surface of said second panel (24).

13. A mobile multi-function electronic device (10), according to claim 1, wherein the microprocessor (1) is configured to enable:
a communications function when said panels (22, 24) have a relative position in the range of 160 ° to 170°,
a digital camera function when said panels (22, 24) have a relative position in the range of 360 °, and
a notepad function when said panels (22, 24) have a relative position of either 180 ° or 360°.

14. A mobile multi-function electronic device (10), according to claim 13, wherein the microprocessor (1) is configured to enable:
a personal digital assistant function when said panels (22, 24) have a relative position of either 180 ° or 360°;
a clock function when said panels (22, 24) have a relative position of 360°;
a radio function when said panels (22, 24) have a relative position of 360°; and
a photo display function when said panels (22, 24) have a relative position of 300°.

15. A mobile multi-function electronic device (10), according to claim 1, wherein said second panel (24) is connected to said first panel (21) by a hinge (26), said hinge (26)_being constructed to allow the relative movement of said first and second panels (22, 24) in a range of positions from 0° at which said front surfaces of said panels (22, 24) are facing each other to 360° at which said back surfaces of said panels (22, 24) are facing each other.

16. A mobile multi-function electronic device (10), according to claim 1, further comprising a plurality of electronic components (1, 18, 16, 31, 29, 25) arranged within the panels (22, 24) configured to provide multiple functions selectable by the user.

17. A method comprising:
monitoring a relative position of a first panel and a second panel of a mobile multi-function electronic device to determine one of at least three pre-determined positions, wherein each of the at the least three pre-determined positions is associated with one or
more functions accessible for user selection;
determining one or more functions accessible for user selection responsive to the determination one of at least three pre-determined positions and said association;
receiving a user selection of one of the determined one or more functions accessible for user selection; and
enabling the selected function;
wherein the mobile multi-function electronic device comprises:
the first panel having front and back surfaces;
the second panel having front and back surfaces, wherein said first and second panels are connected by means of a hinge, said hinge constructed to allow relative movement of said first and second panels in a range of positions from 0° at which said front surfaces of said panels are facing each other to 360° at which said back surfaces of said panels are facing each other; and
a touch sensitive display (16).

18. A method according to claim 17, comprising:
enabling a communications function when the relative position of the panels (22, 24) is in the range of 160° to 170°;
enabling a digital camera function when the relative position of the panels (22, 24) is 360°; and
enabling a notepad function when the relative position of the panels (22, 24) is either 180° or 360°.

19. A method according to claim 18, further comprising enabling a personal digital assistant function when the relative position of the panels (22, 24) is either 180° or 360°.

20. A method according to claim 18, further comprising enabling a clock function when the relative position of the panels (22, 24) is 300°.

21. A method according to claim 18, further comprising enabling a radio function when the relative position of the panels (22, 24) is 300°.

22. A method according to claim 18, further comprising enabling a photo display function when the relative position of the panels (22, 24) is 300°.

## Patentansprüche

1. Mobile elektronische Mehrfunktionseinrichtung (10), umfassend:
eine erste Tafel (22), die eine Vorderseite (22a) und eine Rückseite (22b) aufweist;
eine zweite Tafel (24), die eine Vorderseite (24a) und eine Rückseite (24b) aufweist; wobei die erste und die zweite Tafel mittels eines Scharniers miteinander verbunden sind, wobei das Scharnier so eingebaut ist, dass es eine relative Bewegung der ersten und der zweiten Tafel in einem Bereich von Positionen von 0°, wobei sich die beiden Vorderseiten der Tafeln gegenüberliegen, bis 360° erlaubt, wobei sich die beiden Rückseiten der Tafeln gegenüberliegen; und
eine berührungsempfindliche Anzeige (16);
**dadurch gekennzeichnet, dass** die mobile elektronische Mehrfunktionseinrichtung konfiguriert ist zum:
Überwachen einer relativen Position der ersten und der zweiten Tafel, um eine von mindestens drei vorab ermittelten Positionen zu ermitteln, wobei jede der mindestens drei vorab ermittelten Positionen einer oder mehreren für eine Benutzerauswahl zugänglichen Funktionen zugeordnet ist,
Ermitteln einer oder mehrerer für eine Benutzerauswahl zugänglicher Funktionen als Reaktion auf die Ermittlung einer von mindestens drei vorab ermittelten Positionen und deren Zuordnung,
Empfangen einer Benutzerauswahl einer der ermittelten einen oder mehreren für eine Benutzerauswahl zugänglichen Funktionen, und
Aktivieren der ausgewählten Funktion.

2. Mobile elektronische Mehrfunktionseinrichtung (10) nach Anspruch 1, die außerdem umfasst:
die berührungsempfindliche Anzeige, die in die Vorderseite der ersten Tafel (22) eingebaut ist, um dem Benutzer zu erlauben, Daten und Bilder anzusehen, wie es von der ausgewählten Funktion gefordert wird;
eine Tastatur (14), die in die Vorderseite der zweiten Tafel (24) eingebaut ist, um dem Benutzer zu erlauben, Daten und Befehle einzugeben, wie es von der ausgewählten Funktion gefordert wird;
ein mobiles Kommunikationsmodul (18), das in den Tafeln enthalten ist und mit einem Mikroprozessor verbunden ist, um eine mobile Kommunikationsfunktion bereitzustellen;
ein digitales Kameramodul (31), das in die mobile elektronische Mehrfunktionseinrichtung (10) eingebaut ist und mit dem Mikroprozessor verbunden ist, um dem Benutzer zu erlauben, digitale Bilder in einer funktionsgemäßen Zuordnung zu dem Anzeigebildschirm aufzunehmen; und
ein Notizblockmodul (29), das in die mobile elektronische Mehrfunktionseinrichtung (10) eingebaut ist und mit dem Mikroprozessor verbunden ist, um dem Benutzer zu erlauben, frei gebildete Notizen einzugeben.

3. Mobile elektronische Mehrfunktionseinrichtung (10) nach Anspruch 2, wobei das Notizblockmodul (29) in einer funktionsgemäßen Zuordnung zu der berührungsempfindlichen Anzeige (16) steht.

4. Mobile elektronische Mehrfunktionseinrichtung (10) nach Anspruch 2, wobei die Anordnung der Komponenten der digitalen Kamera (31) konfiguriert ist, um verwendet zu werden, wenn die relative Position der Tafeln (22, 24) bei 360° liegt.

5. Mobile elektronische Mehrfunktionseinrichtung (10) nach Anspruch 2, wobei die Anordnung der Komponenten des Notizblockmoduls (29) konfiguriert ist, um verwendet zu werden, wenn die relative Position der Tafeln (22, 24) bei 360° und 180° liegt.

6. Mobile elektronische Mehrfunktionseinrichtung (10) nach Anspruch 2, wobei die Anordnung der Komponenten des mobilen Kommunikationsmoduls (18) konfiguriert ist, um verwendet zu werden, wenn die relative Position der Tafeln (22, 24) in dem Bereich von 160° bis 170° liegt.

7. Mobile elektronische Mehrfunktionseinrichtung (10) nach Anspruch 1, die außerdem eine Anordnung von Funktionstasten und -schaltern (4) umfasst, die auf den Tafeln (22, 24) angeordnet sind und geeignet sind, um die Verwendung der zahlreichen Funktionen zu erleichtern, wobei den Schaltern durch den Mikroprozessor (1) abhängig von der relativen Position der Tafeln (22, 24) und der von dem Benutzer ausgewählten Funktion unterschiedliche Funktionalitäten zugewiesen werden.

8. Mobile elektronische Mehrfunktionseinrichtung (10) nach Anspruch 2, die außerdem umfasst:
einen sekundären Anzeigebildschirm (108), der in die Rückseite der zweiten Tafel (24) eingebaut ist, um dem Benutzer zu erlauben, Daten und Bilder anzusehen, wie es von der ausgewählten Funktion gefordert wird, wenn die relative Position der Tafeln (22, 24) die berührungsempfindliche Anzeige (16) verdeckt,
ein Tastenfeld (14), das in die Rückseite der zweiten Tafel (24) eingebaut ist, um dem Benutzer zu erlauben, Daten und Befehle einzugeben, wie es von der ausgewählten Funktion gefordert wird, wenn die relative Position der Tafeln (22, 24) die Tastatur verdeckt,
wobei eine Linse für das digitale Kameramodul (31) in die Rückseite der ersten Tafel (22) eingebaut ist, um ein Blickfeld bereitzustellen, das sich hiervon nach außen erstreckt, und wobei die Anordnung der Komponenten des digitalen Kameramoduls (31) konfiguriert ist, um verwendet zu werden, wenn die relative Position der Tafeln (22, 24) bei 0° liegt.

9. Mobile elektronische Mehrfunktionseinrichtung (10) nach Anspruch 2, die außerdem ein Taktmodul umfasst, das in die mobile elektronische Mehrfunktionseinrichtung (10) eingebaut ist und mit dem Mikroprozessor verbunden ist, um Zeitfunktionen bereitzustellen, die dem Benutzer erlauben, Zeitinformationen in einer funktionsgemäßen Zuordnung zu dem Anzeigebildschirm anzusehen, und wobei das Taktmodul aktiviert wird, wenn die relative Position der Tafeln bei 300° liegt, wobei die mobile elektronische Mehrfunktionseinrichtung (10) in einer freistehenden Position auf der Vorderseite der zweiten Tafel abgestützt wird.

10. Mobile elektronische Mehrfunktionseinrichtung (10) nach Anspruch 2, die außerdem ein Funkmodul umfasst, das in die mobile elektronische Mehrfunktionseinrichtung (10) eingebaut ist und mit dem Mikroprozessor verbunden ist, um eine Funkfunktion bereitzustellen, die dem Benutzer erlaubt, Funkübertragungen zu hören, und wobei das Funkmodul aktiviert wird, wenn die relative Position der Tafeln bei 300° liegt, wobei die mobile elektronische Mehrfunktionseinrichtung (10) in einer freistehenden Position auf der Vorderseite der zweiten Tafel abgestützt wird.

11. Mobile elektronische Mehrfunktionseinrichtung (10) nach Anspruch 2, die außerdem ein persönliches Datenassistentmodul umfasst, das in die mobile elektronische Mehrfunktionseinrichtung (10) eingebaut ist und mit dem Mikroprozessor verbunden ist, um eine persönliche Datenassistentfunktion bereitzustellen, die dem Benutzer erlaubt, Daten einzugeben und anzusehen, die in einer funktionsgemäßen Zuordnung zu dem Anzeigebildschirm stehen, und wobei das persönliche Datenassistentmodul aktiviert wird, wenn die relative Position der Tafeln bei 180° oder 360° liegt.

12. Mobile elektronische Mehrfunktionseinrichtung (10) nach Anspruch 2, die außerdem ein Fotomodul (25) umfasst, das konfiguriert ist, um eine Fotoanzeigefunktion bereitzustellen, die dem Benutzer erlaubt, ein Foto in einer funktionsgemäßen Zuordnung zu dem Anzeigebildschirm (16) anzusehen, und wobei das Taktmodul (25) aktiviert wird, wenn die relative Position der Tafeln bei 300° liegt, wobei die mobile elektronische Mehrfunktionseinrichtung (10) in einer freistehenden Position auf der Vorderseite der zweiten Tafel (24) abgestützt wird.

13. Mobile elektronische Mehrfunktionseinrichtung (10) nach Anspruch 1, wobei der Mikroprozessor (1) konfiguriert ist zum Aktivieren:
einer Kommunikationsfunktion, wenn die Tafeln (22, 24) eine relative Position in dem Bereich von 160° bis 170° aufweisen,
einer digitalen Kamerafunktion, wenn die Tafeln (22, 24) eine relative Position in dem Bereich von 360° aufweisen, und
einer Notizblockfunktion, wenn die Tafeln (22, 24) eine relative Position in dem Bereich von entweder 180° oder 360° aufweisen,

14. Mobile elektronische Mehrfunktionseinrichtung (10) nach Anspruch 13, wobei der Mikroprozessor (1) konfiguriert ist zum Aktivieren:
einer persönlichen Datenassistentfunktion, wenn die Tafeln (22, 24) eine relative Position in dem Bereich von entweder 180° oder 360° aufweisen;
einer Taktfunktion, wenn die Tafeln (22, 24) eine relative Position von 360° aufweisen;
einer Funkfunktion, wenn die Tafeln (22, 24) eine relative Position von 360° aufweisen; und
einer Fotoanzeigefunktion, wenn die Tafeln (22, 24) eine relative Position von 300° aufweisen.

15. Mobile elektronische Mehrfunktionseinrichtung (10) nach Anspruch 1, wobei die zweite Tafel (24) mittels eines Scharniers (26) mit der ersten Tafel (21) verbunden ist, wobei das Scharnier (26) so eingebaut ist, dass es eine relative Bewegung der ersten und der zweiten Tafel (22, 24) in einem Bereich von Positionen von 0°, wobei sich die beiden Vorderseiten der Tafeln (22, 24) gegenüberliegen, bis 360° erlaubt, wobei sich die beiden Rückseiten der Tafeln (22, 24) gegenüberliegen.

16. Mobile elektronische Mehrfunktionseinrichtung (10) nach Anspruch 1, die außerdem eine Vielzahl von elektronischen Komponenten (1, 18, 16, 31, 29, 25) umfasst, die in den Tafeln (22, 24) angeordnet sind und konfiguriert sind, um zahlreiche Funktionen bereitzustellen, die durch den Benutzer auswählbar sind.

17. Verfahren, umfassend:
Überwachen einer relativen Position einer ersten Tafel und einer zweiten Tafel einer mobilen elektronischen Mehrfunktionseinrichtung, um eine von mindestens drei vorab ermittelten Positionen zu ermitteln, wobei jede der mindestens drei vorab ermittelten Positionen einer oder mehreren für eine Benutzerauswahl zugänglichen Funktionen zugeordnet ist;
Ermitteln einer oder mehrerer für eine Benutzerauswahl zugänglicher Funktionen als Reaktion auf die Ermittlung einer von mindestens drei vorab ermittelten Positionen und deren Zuordnung;
Empfangen einer Benutzerauswahl einer der ermittelten einen oder mehreren für eine Benutzerauswahl zugänglichen Funktionen; und
Aktivieren der ausgewählten Funktion;
wobei die mobile elektronische Mehrfunktionseinrichtung umfasst:
die erste Tafel, die eine Vorderseite und eine Rückseite aufweist;
die zweite Tafel, die eine Vorderseite und eine Rückseite aufweist; wobei die erste und die zweite Tafel mittels eines Scharniers miteinander verbunden sind, wobei das Scharnier so eingebaut ist, dass es eine relative Bewegung der ersten und der zweiten Tafel in einem Bereich von Positionen von 0°, wobei sich die beiden Vorderseiten der Tafeln gegenüberliegen, bis 360° erlaubt, wobei sich die beiden Rückseiten der Tafeln gegenüberliegen; und
eine berührungsempfindliche Anzeige (16).

18. Verfahren nach Anspruch 17, umfassend:
Aktivieren einer Kommunikationsfunktion, wenn die relative Position der Tafeln (22, 24) in dem Bereich von 160° bis 170° liegt;
Aktivieren einer digitalen Kamerafunktion, wenn die relative Position der Tafeln (22, 24) bei 360° liegt; und
Aktivieren einer Notizblockfunktion, wenn die relative Position der Tafeln (22, 24) entweder bei 180° oder bei 360° liegt.

19. Verfahren nach Anspruch 18, das außerdem umfasst: Aktivieren einer persönlichen Datenassistentfunktion, wenn die relative Position der Tafeln (22, 24) entweder bei 180° oder bei 360° liegt.

20. Verfahren nach Anspruch 18, das außerdem umfasst: Aktivieren einer Taktfunktion, wenn die relative Position der Tafeln (22, 24) bei 300° liegt.

21. Verfahren nach Anspruch 18, das außerdem ein Aktivieren einer Funkfunktion umfasst, wenn die relative Position der Tafeln (22, 24) bei 300° liegt.

22. Verfahren nach Anspruch 18, das außerdem ein Aktivieren einer Fotoanzeigefunktion umfasst, wenn die relative Position der Tafeln (22, 24) bei 300° liegt.

## Revendications

1. Dispositif électronique mobile à fonctions multiples (10) comprenant :
un premier panneau (22) ayant une surface avant (22a) et une surface arrière (22b) ;
un second panneau (24) ayant une surface avant (24a) et une surface arrière (24b) ;
dans lequel lesdits premier et second panneaux sont raccordés au moyen d'une charnière, ladite charnière étant construite de sorte à permettre un mouvement relatif desdits premier et second panneaux dans une plage de positions allant de 0° où lesdites surfaces avant desdits panneaux se font face, jusqu'à 360° où lesdites surfaces arrière desdits panneaux se font face ;
et un dispositif d'affichage à commande tactile (16) ;
**caractérisé en ce que** le dispositif électronique mobile à fonctions multiples est configuré pour :
surveiller une position relative des premier et second panneaux afin de déterminer une position parmi au moins trois positions prédéterminées, dans lequel chaque position parmi les au moins trois positions prédéterminées est associée à une ou plusieurs fonctions accessibles pour une sélection d'utilisateur,
déterminer une ou plusieurs fonctions accessibles pour une sélection d'utilisateur à la suite de la détermination d'une position parmi les au moins trois positions prédéterminées et de ladite association,
recevoir une sélection d'utilisateur d'une fonction parmi une ou plusieurs fonctions déterminées accessibles pour une sélection d'utilisateur, et
permettre la fonction sélectionnée.

2. Dispositif électronique mobile à fonctions multiples (10) selon la revendication 1, comprenant en outre :
le dispositif d'affichage à commande tactile étant construit dans la surface avant du premier panneau (22) pour permettre à l'utilisateur de voir des données et des images selon les besoins au moyen de la fonction sélectionnée ;
un clavier (14) construit dans la surface avant du second panneau (24) pour permettre à un utilisateur de saisir des données et des commandes selon les besoins au moyen de la fonction sélectionnée ;
un module de communication mobile (18) contenu dans les panneaux et raccordé au microprocesseur pour fournir une fonction de communication mobile ;
un module d'appareil de prise de vues numérique (31) construit dans le dispositif électronique mobile à fonctions multiples (10) et raccordé au microprocesseur pour permettre à l'utilisateur de capturer des images numériques en association fonctionnelle avec l'écran de visualisation ; et
un module de bloc-notes (29) construit dans le dispositif électronique mobile à fonctions multiples (10) et raccordé au microprocesseur pour permettre à l'utilisateur de saisir des notes de formule libre.

3. Dispositif électronique mobile à fonctions multiples (10) selon la revendication 2, dans lequel ledit module de bloc-notes (29) est en association fonctionnelle avec le dispositif d'affichage à commande tactile (16).

4. Dispositif électronique mobile à fonctions multiples (10) selon la revendication 2, dans lequel l'agencement des composants de l'appareil de prise de vues numérique (31) est configuré de sorte à être utilisé lorsque la position relative des panneaux (22, 24) est à 360°.

5. Dispositif électronique mobile à fonctions multiples (10) selon la revendication 2, dans lequel l'agencement des composants du module de bloc-notes (29) est configuré de sorte à être utilisé lorsque la position relative des panneaux (22, 24) est à 360° et à 180°.

6. Dispositif électronique mobile à fonctions multiples (10) selon la revendication 2, dans lequel l'agencement des composants du module de communication mobile (18) est configuré de sorte à être utilisé lorsque la position relative des panneaux (22, 24) se situe dans la plage allant de 160° à 170°.

7. Dispositif électronique mobile à fonctions multiples (10) selon la revendication 1, comprenant en outre un agencement de touches de fonction et de boutons (4) disposés sur lesdits panneaux (22, 24) et conçus pour faciliter l'utilisation desdites multiples fonctions, dans lequel lesdits boutons sont attribués à une fonctionnalité différente par le microprocesseur (1) en fonction de la position relative des panneaux (22, 24) et de la fonction sélectionnée par l'utilisateur.

8. Dispositif électronique mobile à fonctions multiples (10) selon la revendication 2, comprenant en outre :
un écran de visualisation secondaire (108) construit dans la surface arrière dudit second panneau (24) pour permettre à l'utilisateur de voir des données et des images selon les besoins au moyen de la fonction sélectionnée lorsque la position relative des panneaux (22, 24) cache le dispositif d'affichage à commande tactile (16) ;
un pavé numérique (14) construit dans la surface arrière dudit second panneau (24) pour permettre à l'utilisateur de saisir des données et des commandes selon les besoins au moyen de la fonction sélectionnée lorsque la position relative des panneaux (22, 24) cache le clavier ; et
dans lequel une lentille pour le module d'appareil de prise de vues numérique (31) est construite dans la surface arrière du premier panneau (22) pour fournir un champ de vision s'étendant vers l'extérieur depuis cette dernière et, en outre, dans lequel l'agencement de composants du module d'appareil de prise de vues numérique (31) est configuré pour être utilisé lorsque la position relative des panneaux (22, 24) est à 0°.

9. Dispositif électronique mobile à fonctions multiples (10) selon la revendication 2, comprenant en outre un module d'horloge construit dans le dispositif électronique mobile à fonctions multiples (10) et raccordé au microprocesseur pour fournir des fonctions temporelles pour permettre à l'utilisateur de voir des informations temporelles en association fonctionnelle avec l'écran de visualisation et dans lequel ledit module d'horloge est activé lorsque la position relative des panneaux est de 300°, ledit dispositif électronique mobile à fonctions multiples (10) étant supporté en position droite libre sur ladite surface avant dudit second panneau.

10. Dispositif électronique mobile à fonctions multiples (10) selon la revendication 2, comprenant en outre un module radio construit dans le dispositif électronique mobile à fonctions multiples (10) et raccordé au microprocesseur pour fournir une fonction de radio pour permettre à l'utilisateur d'écouter des transmissions radio et dans lequel ledit module radio est activé lorsque la position relative des panneaux est de 300°, ledit dispositif électronique mobile à fonctions multiples (10) étant supporté en position droite libre sur ladite surface avant dudit second panneau.

11. Dispositif électronique mobile à fonctions multiples (10) selon la revendication 2, comprenant en outre un module d'assistant numérique personnel construit dans le dispositif électronique mobile à fonctions multiples (10) et raccordé au microprocesseur pour fournir une fonction d'assistant numérique personnel pour permettre à l'utilisateur de saisir et de voir des données en association fonctionnelle avec l'écran de visualisation et dans lequel ledit module d'assistant numérique personnel est activé lorsque la position relative des panneaux est de 180° ou de 360°.

12. Dispositif électronique mobile à fonctions multiples (10) selon la revendication 2, comprenant en outre un module photo (25) configuré pour fournir une fonction d'affichage de photo pour permettre à l'utilisateur de voir une photo en association fonctionnelle avec l'écran de visualisation (16) et dans lequel ledit module d'horloge (25) est activé lorsque la position relative des panneaux est de 300°, ledit dispositif électronique mobile à fonctions multiples (10) étant supporté dans une position droite libre sur ladite surface avant dudit second panneau (24).

13. Dispositif électronique mobile à fonctions multiples (10) selon la revendication 1, dans lequel le microprocesseur (1) est configuré pour permettre :
une fonction de communication lorsque lesdits panneaux (22, 24) ont une position relative dans la plage allant de 160° à 170°,
une fonction d'appareil de prise de vues numérique lorsque lesdits panneaux (22, 24) ont une position relative dans la plage de 360°, et
une fonction de bloc-notes lorsque lesdits panneaux (22, 24) ont une position relative dans la plage soit de 180°, soit de 360°.

14. Dispositif électronique mobile à fonctions multiples (10) selon la revendication 13, dans lequel le microprocesseur (1) est configuré pour permettre :
une fonction d'assistant numérique personnel lorsque lesdits panneaux (22, 24) ont une position relative soit de 180°, soit de 360°,
une fonction d'horloge lorsque lesdits panneaux (22, 24) ont une position relative de 360°,
une fonction de radio lorsque lesdits panneaux (22, 24) ont une position relative de 360°, et une fonction d'affichage de photo lorsque lesdits panneaux (22, 24) ont une position relative de 300°.

15. Dispositif électronique mobile à fonctions multiples (10) selon la revendication 1, dans lequel ledit second panneau (24) est raccordé au dit premier panneau (21) au moyen d'une charnière (26), ladite charnière (26) étant construite de sorte à permettre le mouvement relatif desdits premier et second panneaux (22, 24) dans une plage de positions allant de 0° où lesdites surfaces avant desdits panneaux (22, 24) se font face, jusqu'à 360° où lesdites surfaces arrière desdits panneaux (22, 24) se font face.

16. Dispositif électronique mobile à fonctions multiples (10) selon la revendication 1, comprenant en outre une pluralité de composants électroniques (1, 18, 16, 31, 29, 25) disposés dans les panneaux (22, 24) configurés pour fournir de multiples fonctions pouvant être sélectionnées par l'utilisateur.

17. Procédé consistant à :
surveiller une position relative d'un premier et d'un second panneau d'un dispositif électronique mobile à fonctions multiples afin de déterminer une position parmi au moins trois positions prédéterminées, dans lequel chaque position parmi les au moins trois positions prédéterminées est associée à une ou plusieurs fonctions accessibles pour une sélection d'utilisateur,
déterminer une ou plusieurs fonctions accessibles pour une sélection d'utilisateur à la suite de la détermination d'une position parmi les au moins trois positions prédéterminées et de ladite association,
recevoir une sélection d'utilisateur d'une fonction parmi une ou plusieurs fonctions déterminées accessibles pour une sélection d'utilisateur, et
permettre la fonction sélectionnée ;
dans lequel le dispositif électronique mobile à fonctions multiples comprend :
le premier panneau ayant des surfaces avant et arrière ;
le second panneau ayant des surfaces avant et arrière, dans lequel lesdits premier et second panneaux sont raccordés au moyen d'une charnière, ladite charnière étant construite de sorte à permettre un mouvement relatif desdits premier et second panneaux dans une plage de positions allant de 0° où lesdites surfaces avant desdits panneaux se font face, jusqu'à 360° où lesdites surfaces arrière desdits panneaux se font face ; et
un dispositif d'affichage à commande tactile (16).

18. Procédé selon la revendication 17, consistant à :
permettre une fonction de communication lorsque la position relative des panneaux (22, 24) se situe dans la plage allant de 160° à 170° ;
permettre une fonction d'appareil de prise de vues numérique lorsque la position relative des panneaux (22, 24) est de 360°, et
permettre une fonction de bloc-notes lorsque la position relative des panneaux (22, 24) est soit de 180°, soit de 360°.

19. Procédé selon la revendication 18, consistant en outre à permettre une fonction d'assistant numérique personnel lorsque la position relative des panneaux (22, 24) est soit de 180°, soit de 360°.

20. Procédé selon la revendication 18, consistant en outre à permettre une fonction d'horloge lorsque la position relative des panneaux (22, 24) est de 300°.

21. Procédé selon la revendication 18, consistant en outre à permettre une fonction de radio lorsque la position relative des panneaux (22, 24) est de 300°.

22. Procédé selon la revendication 18, consistant en outre à permettre une fonction d'affichage de photo lorsque la position relative des panneaux (22, 24) est de 300°.
